# EUROPEAN PATENT SPECIFICATION

(11) **EP 1 862 632 B1**
(45) Date of publication and mention of the grant of the patent: **09.11.2011**
(21) Application number: 06114714.6
(22) Date of filing: 30.05.2006
(51) Int. Cl.: E06B 3/86

(54) **Trimmable Door Product with Pigmented Compression Molded Skins**
Pigmentierte Tür
Porte pigmentée

(43) Date of publication of application: 05.12.2007
(73) Proprietor: NAN YA PLASTICS CORPORATION, Taipei (TW)
(72) Inventor: Chen Wang, Kuei-Yung, Tung Hwa North Road, Taipei (TW)
(74) Representative: Carpmael, Robert Maurice Charles

(56) References cited:
- US-A- 3 950 894
- US-A- 4 550 540
- US-A- 4 864 789
- US-A- 5 934 040
- US-A1- 2001 001 356

## Description

### BACKGROUND

### 1. Field of the Invention

The invention relates to a trimmable door product with pigmented compression molded skins, particularly the skins have a uniform coloration throughout enabling the perimeter to be trimmed without coloration variations

### 2. Description of the Prior Art

Traditionally the molded skins for making doors of the type disclosed in U.S. Pat. No. 3,950,894 issued to DiMaio and U.S. Pat. No. 4,550,540 issued to Thorn are constructed by weight of polyester resin 12% to 15%, polystyrene 5% to 15%, calcium carbonate 40% to 50% and chopped fiber glass 15% to 25%. Such a mixture is placed in layer in a compression molding machine where it is subjected to pressures from 600 to 1,500 psi for a cure period from 60 to 200 seconds. The mixtures are usually referred to "sheet molding compounds" [SMC] and are normally thermoset materials such as phenolics, urea, melamines and polyesters. A general description of the process is found in an article entitled, "Compression Molding" by N. D. Simons in Modem Plastics Encyclopedia, Vol. 54 No. 10A (1977-78).

The result of the SMC process is a skin having a thickness of from about 0.05 inches to about 0.20 inches, depending on the application, which can be use in the doors of the type referenced. However, the prior art skins when removed from the mold have pale gray, streaked appearance. Thus, doors, and other products constructed with such prior art skins must be painted or stained to achieve a product which is architecturally acceptable.

Staining or painting such door products is expensive and time consuming; further the surfaces of such skins is not very porous, often requiring expensive materials or processes to paint them. Further such painted or stained door products may become scratched or abraded in use whereby they may look tacky and cheap after installation.

Another draw back of such prior art door products is that staining or painting may obscure patterns impressed on the exterior of the surface of the skins during the molding process.

In addition, when using skins which are stained or painted, the edges when trimming is required exposes areas of discoloration.

For improving those molded skins mentioned above, the applicant had been granted an U.S. Pat. No. 5,934,040 which invented and disclosed a kind of pigmented compression molded skins with white or brown color being distributed uniformity throughout the skin, whereby scratches and abrasions will not to be so apparent during service and trimming the skins will not result in a variegated or streaked door structure with color discontinuities in the area where the trimming occurs.

Further actual tests of the doors using skins made according to the U.S. Pat. No. 5,934,040 had shown improved weathering characteristics under ASTM G26 testing procedures over the conventional stained or painted doors of a similar construction.

With the instant invention, it has been found that certain pigments may be further added to the patented materials shown on U.S. Pat. No. 5,934,040 to manufacture skins of the type described without degrading the resulting skin product formed through or by the compression molding processes whereby a multitude of colors can be achieved. In this regard, titanium oxide, ferric oxide, organic green pigment, organic blue pigment and carbon black in mixtures, or as individual components, can be added in quantities up to 20% without degrading the skins.

### SUMMARY OF THE INVENTION

An improved novel compression molded skin product associated with the U.S. Pat. No. 5,934,040 is provided with white, brown, red, green, blue or black color being distributed uniformity throughout the skin whereby scratches and abrasions will not to be so apparent, which is composed by weight of polyester resins 10% to 25%, styrene monomer 5% to 15%, polystyrene 2% to 8%, calcium carbonate 30% to 60% and chopped fiber glass 15% to 30%, along with a pigment from 0.2% to 15% by weight selected from the group consisting of titanium oxide, ferric oxide (iron oxide), organic green pigment, organic blue pigment and carbon black.

Further, the white pigmented compression molded skins is composed by weight of polyester resins 10% to 25%, styrene monomer 5% to 15%, polystyrene 2% to 8%, calcium carbonate 30% to 60% and chopped fiber glass 15% to 30%, along with a pigment from 5% to 15% titanium oxide by weight.

The brown pigmented compression molded skins is composed by weight of polyester resins 10% to 25%, styrene monomer 5% to 15%, polystyrene 2% to 8%, calcium carbonate 30% to 60% and chopped fiber glass 15% to 30%, along with two pigments from 0.2% to 2% ferric oxide and 0.2% to 2% titanium oxide by weight.

The red pigmented compression molded skins is composed by weight of polyester resins 10% to 25%, styrene monomer 5% to 15%, polystyrene 2% to 8%, calcium carbonate 30% to 60% and chopped fiber glass 15% to 30%, along with a pigment from 0.2% to 2% ferric oxide by weight.

The green pigmented compression molded skins is composed by weight of polyester resins 10% to 25%, styrene monomer 5% to 15%, polystyrene 2% to 8%, calcium carbonate 30% to 60% and chopped fiber glass 15% to 30%, along with two pigments from 0.2% to 2% organic green pigment and 0.05% to 0.5% carbon black by weight.

The blue pigmented compression molded skins is composed by weight of polyester resins 10% to 25%, styrene monomer 5% to 15%, polystyrene 2% to 8%, calcium carbonate 30% to 60% and chopped fiber glass 15% to 30%, along with two pigments from 0.2% to 2% organic blue pigment and 0.05% to 0.5% carbon black by weight.

The black pigmented compression molded skins with white color is composed by weight of polyester resins 10% to 25%, styrene monomer 5% to 15%, polystyrene 2% to 8%, calcium carbonate 30% to 60% and chopped fiber glass 15% to 30%, along with a pigment from 0.2% to 2% carbon black by weight.

A pigmented trimmable door product can be manufactured if the skins made as described, include integral edges which mate with one another to leave a hollow core which is filled with foam.

### DESCRIPTION OF THE DRAWINGS

The invention will be better understood by referring to the attached drawing, in conjunction with this specification wherein:

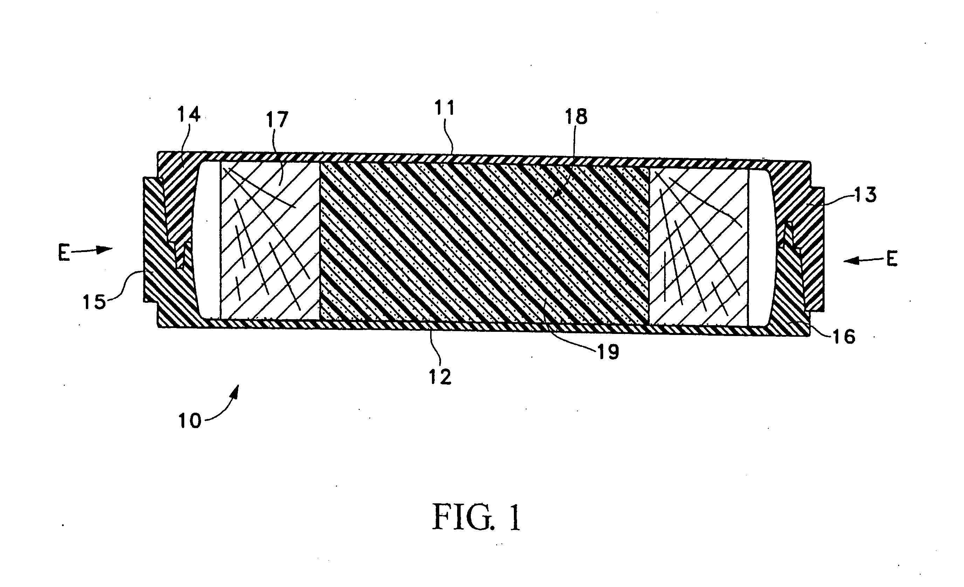

FIG. 1 is a cross section of a commercial door product using the skins made according to this invention.

### DESCRIPTION OF THE PREFERRED EMBODIMENT

Polyester resins are known in the art and are readily prepared by fusing a mixture of phthalic or isophthalic anhydride, maleic anhydride and propylene glycol. Such resins can be cured (converted to infusible structures) by catalysts and/or heat.

A more or less conventional mixture for manufacturing traditional skin use in door products made by Sheet Compression Molding, is as follows:

| **Composition** | |
|---|---|
| Polyester Resins | 12% to 20% |
| Polystyrene | 5% to 15% |
| Calcium Carbonate | 40% to 50% |
| Chopped Fiber Glass | 15% to 25% |

### Composition #1: For a White Pigmented Skin

To construct a white pigmented, reinforced skin using a compression molding process of the type described the following mixture, by weight, was prepared:

| **Composition #1** | |
|---|---|
| Polyester Resins | 10% to 25% |
| Styrene Monomer | 5% to 15% |
| Polystyrene | 2% to 8% |
| Calcium Carbonate | 30% to 60% |
| Chopped Fiber Glass | 15% to 30% |
| Titanium Oxide | 5% to 15% |

### Composition #2: A Brown Pigmented Skin

To constructed a brown pigmented, reinforced skin using a compression molding process of the type described the following mixture was prepared:

| **Composition #2** | |
|---|---|
| Polyester Resins | 10% to 25% |
| Styrene Monomer | 5% to 15% |
| Polystyrene | 2% to 8% |
| Calcium Carbonate | 30% to 60% |
| Chopped Fiber Glass | 15% to 30% |
| Ferric Oxide | 0.2% to 2% |
| Titanium Oxide | 0.2% to 2% |

### Composition #3: A Red Pigmented Skin

To constructed a red pigmented, reinforced skin using a compression molding process of the type described the following mixture was prepared:

| **Composition #3** | |
|---|---|
| Polyester Resins | 10% to 25% |
| Styrene Monomer | 5% to 15% |
| Polystyrene | 2% to 8% |
| Calcium Carbonate | 30% to 60% |
| Chopped Fiber Glass | 15% to 30% |
| Ferric Oxide | 0.2% to 2% |

### Composition #4: A Green Pigmented Skin

To constructed a green pigmented, reinforced skin using a compression molding process of the type described the following mixture was prepared:

| **Composition #4** | |
|---|---|
| Polyester Resins | 10% to 25% |
| Styrene Monomer | 5% to 15% |
| Polystyrene | 2% to 8% |
| Calcium Carbonate | 30% to 60% |
| Chopped Fiber Glass | 15% to 30% |
| Organic Green | 0.2% to 2% |
| Carbon Black | 0.05% to 0.5% |

### Composition #5: A Blue Pigmented Skin

To constructed a blue pigmented, reinforced skin using a compression molding process of the type described the following mixture was prepared:

| **Composition #5** | |
|---|---|
| Polyester Resins | 10% to 25% |
| Styrene Monomer | 5% to 15% |
| Polystyrene | 2% to 8% |
| Calcium Carbonate | 30% to 60% |
| Chopped Fiber Glass | 15% to 30% |
| Organic Blue | 0.2% to 2% |
| Carbon Black | 0.05% to 0.5% |

### Composition #6: A Black Pigmented Skin

To constructed a black pigmented, reinforced skin using a compression molding process of the type described the following mixture was prepared:

| **Composition #6** | |
|---|---|
| Polyester Resins | 10% to 25% |
| Styrene Monomer | 5% to 15% |
| Polystyrene | 2% to 8% |
| Calcium Carbonate | 30% to 60% |
| Chopped Fiber Glass | 15% to 30% |
| Carbon Black | 0.05% to 0.5% |

Once one or the other composition has been prepared the resulting mixture is subjected to pressures of from 600 to 1,500 psi for a period of 60 to 200 seconds between two compression molding dies with the addition of heat up to 400 degrees F.

The resultant fused skin will have a uniform color throughout its thickness, in Composition #1 "white"; in Composition #2 "brown"; in Composition #3 "red"; in Composition #4 "green"; in Composition #5 "blue"; and in Composition #6 "black". Thus when such skins are used in door structures such as described in the above patents, the skins may be trimmed without a loss of color uniformity which is a distinct advantage.

The pigmented skin products made according to this invention have particular application to door products or the like wherein integral parts of the skin are used to close the edges of a door, for example see U.S. Pat. No. 4,864,789 issued to Thron. Thus, if skins include an integral edge about the perimeter having a thickness much greater than the thickness of the skin which mates with such an edge formed the other skin, a thick edge is provided which can be trimmed without distortion of color of the door.

While the construction shown in the referenced patent is not suitable for trimming, the use of differently constructed mating edges do allow for the novel trimming described.

Using the pigmented skins made with compositions #1, #2, #3, #4, #5 or #6 to construct a door product respectively, each door have been constructed with a cross-sectional structure as illustrated in FIG 1. It can be seen that this door product 10 has exterior skins 11 and 12. Each of these skins have integral edge members; on skin 11, integral edges 13 and 14, and on skin 12, integral edges 15 and 16 which edges are formed when the compression molding process is carried out and extend normal to the surfaces of their associated skin. The thickness of the integral edges is much thicker than the thickness of the skins and usually ranges from 0.2 inches to 1.00 inches to allow for trimming.

When the door 10 is constructed the integral edges 13, 14, 15 and 16 mate with one another to close the edges of the door as can be seen in FIG. 1. If desired stiles 17 can be placed between the skins 11 and 12 before the edges are glued together. Rails (not shown) may also be used. When either stiles or rails are used they are glued to the skins but do not engage the integral edges.

The core 18 between the two skins 11 and 12 is filled with a formed material 19. A foamed material 19 which is very suitable for this purpose is a high density polyurethane form which is often used in a door of this type. By making a small bore through one of the edges, a probe can be inserted to introduce foam agents in to the core 18 of the door, which will then expand to fill it.

The door 10 having the skins 11 and 12 made with composition #1, #2, #3, #4, #5 or #6 according to the disclosure in FIG. 1 can be appreciated that the edges "E" of the door can be trimmed to make the door fit the jam. When such trimming takes place, due to the uniformity of color throughout the skins and their edges, no discoloration occurs and the trimmed edges of the door can be lightly sanded to bring them in conformity with the planner surfaces of the skins 11 and 12 of the door 10.

As indicated doors made with these skins do not have to be stained or painted; a study of the costs to paint or stain the prior art doors indicate that labor and materials to stain a prior art door can run from $40.00 to $100.00 which is saved by using a pigmented door; further the pigmented door can be stained or painted when desired and where only a shade of white, brown, red, green, blue or black is desired, a cost saving is still obtained.

When doors of the type described are manufactured, a graining pattern is usually placed in the dies which give the outer surfaces of the fused skins a natural look, by creating imitation wood grain patterns thereon. When doors are stained and/or painted such patterns, having depths in the range of 0.0045 inches to 0.0006 inches, are often filled with the paint or stain, drastically changing the surface appearance if the skins. With this invention, since the pigment is in the skin and uniform through out the skin, any imitation graining pattern of the skins is vibrant and positive, improving the over all quality of the door.

## Claims

1. A trimmable door product comprising spaced apart compression molded skins (11, 12) with integral edges (13, 14, 15, 16), the integral edges (13, 14, 15, 16) being operable to mate to close the entire perimeter of the door (10) between the skins (11, 12) forming a core space (18) therebetween, the core space (18) being filled with a high density foam, **characterized in that** the skins (11, 12) comprising by weight from 10% to 25% polyester resin, 5% to 15% styrene monomer, 2% to 8% polystyrene, 30% to 60% calcium carbonate and 15% to 30% chopped fiber glass and having from 0.2% to 15% of a pigment selected from the group consisting of titanium oxide, ferric oxide, organic green pigment, organic blue pigment and carbon black whereby the skins (11, 12) have a uniform coloration throughout enabling the perimeter to be trimmed without coloration variations.

2. The trimmable door product as defined in claim 1, **characterized in that** the pigment is by weight 5% to 15% titanium oxide.

3. The trimmable door product as defined in claim 1, **characterized in that** the pigment is by weight 0.2% to 2% titanium oxide and 0.2% to 2% ferric oxide.

4. The trimmable door product as defined in claim 1, **characterized in that** the pigment is by weight 0.2% to 2% ferric oxide.

5. The trimmable door product as defined in claim 1, **characterized in that** the pigment is by weight 0.2% to 2% organic green pigment and 0.05% to 0.5% carbon black.

6. The trimmable door product as defined in claim 1, **characterized in that** the pigment is by weight 0.2% to 2% organic blue pigment and 0.05% to 0.5% carbon black.

7. The trimmable door product as defined in claim 1, **characterized in that** the pigment is by weight 0.2% to 2% carbon black.

## Patentansprüche

1. Zuschneidbares Türprodukt, das voneinander beabstandete formgepresste Häute (11, 12) mit angeformten Rändern (13, 14, 15, 16) umfasst, wobei die angeformten Ränder (13, 14, 15, 16) zusammengesteckt werden können, um den gesamten Perimeter der Tür (10) zwischen den Häuten (11, 12) zu schließen und einen Kernraum (18) dazwischen zu bilden, wobei der Kernraum (18) mit einem hochdichten Schaumstoff gefüllt ist, **dadurch gekennzeichnet, dass** die Häute (11, 12) 10 bis 25 Gew.-% Polyesterharz, 5 bis 15 Gew.-% Styrolmonomer, 2 bis 8 Gew.-% Polystyrol, 30 bis 60 Gew.-% Calciumcarbonat und 15 bis 30 Gew.-% geschnittene Glasfasern umfassen und 0,2 bis 15 % eines Pigments aufweisen, das ausgewählt ist aus der Gruppe bestehend aus Titanoxid, Eisenoxid, organischem grünem Pigment, organischem blauem Pigment und Ruß, so dass die Häute (11, 12) durchweg eine gleichmäßige Färbung haben, so dass der Perimeter ohne Färbungsvariationen zugeschnitten werden kann.

2. Zuschneidbares Türprodukt wie in Anspruch 1 definiert, **dadurch gekennzeichnet, dass** das Pigment 5 bis 15 Gew.-% Titanoxid ausmacht.

3. Zuschneidbares Türprodukt wie in Anspruch 1 definiert, **dadurch gekennzeichnet, dass** das Pigment 0,2 bis 2 Gew.-% Titanoxid und 0,2 bis 2 Gew.-% Eisenoxid ausmacht.

4. Zuschneidbares Türprodukt wie in Anspruch 1 definiert, **dadurch gekennzeichnet, dass** das Pigment 0,2 bis 2 Gew.-% Eisenoxid ausmacht.

5. Zuschneidbares Türprodukt wie in Anspruch 1 definiert, **dadurch gekennzeichnet, dass** das Pigment 0,2 bis 2 Gew.-% organisches grünes Pigment und 0,05 bis 0,5 Gew.-% Ruß ausmacht.

6. Zuschneidbares Türprodukt wie in Anspruch 1 definiert, **dadurch gekennzeichnet, dass** das Pigment 0,2 bis 2 Gew.-% organisches blaues Pigment und 0,05 bis 0,5 Gew.-% Ruß ausmacht.

7. Zuschneidbares Türprodukt wie in Anspruch 1 definiert, **dadurch gekennzeichnet, dass** das Pigment 0,2 bis 2 Gew.-% Ruß ausmacht.

## Revendications

1. Produit de porte ajustable, comprenant des peaux moulées par compression (11, 12) séparées avec des bords d'une seule pièce (13, 14, 15, 16), les bords d'une seule pièce (13, 14, 15, 16) étant destinés à s'adapter pour fermer l'ensemble du périmètre de la porte (10) entre les peaux (11, 12), formant un espace d'âme (18) entre elles, l'espace d'âme (18) étant rempli d'une mousse haute densité, **caractérisé en ce que** les peaux (11, 12) comprennent 10% à 25% en poids de résine de polyester, 5% à 15% en poids d'un monomère de styrène, 2% à 8% en poids de polystyrène, 30% à 60% en poids de carbonate de calcium et 15% à 30% en poids de fibres de verre coupées et contiennent 0,2% et 15% d'un pigment sélectionné dans le groupe constitué d'oxyde de titane, d'oxyde ferrique, de pigment vert organique, de pigment bleu organique et de noir de carbone, les peaux (11, 12) ayant ainsi une coloration globale uniforme, permettant d'ajuster le périmètre sans variations de la coloration.

2. Produit de porte ajustable selon la revendication 1, **caractérisé en ce que** le pigment contient 5% à 15% en poids d'oxyde de titane.

3. Produit de porte ajustable selon la revendication 1, **caractérisé en ce que** le pigment contient 0,2% à 2% en poids d'oxyde de titane et 0,2% à 2% en poids d'oxyde ferrique.

4. Produit de porte ajustable selon la revendication 1, **caractérisé en ce que** le pigment contient 0,2 à 2% en poids d'oxyde ferrique.

5. Produit de porte ajustable selon la revendication 1, **caractérisé en ce que** le pigment contient 0,2% à 2% en poids de pigment vert organique et 0,05% à 0,5% en poids de noir de carbone.

6. Produit de porte ajustable selon la revendication 1, **caractérisé en ce que** le pigment contient 0,2% à 2% en poids de pigment bleu organique et 0,05% à 0,5% en poids de noir de carbone.

7. Produit de porte ajustable selon la revendication 1, **caractérisé en ce que** le pigment contient 0,2% à 2% en poids de noir de carbone.
